# FASCICULE DE BREVET EUROPEEN

(11) **EP 2 566 684 B1**
(45) Date de publication et mention de la délivrance du brevet: **18.10.2017**
(21) Numéro de dépôt: 11725132.2
(22) Date de dépôt: 06.05.2011
(51) Int. Cl.: B29C 65/16, B29C 65/78, B60J 5/10

(54) **DISPOSITIF D'ASSEMBLAGE DE DEUX PIECES EN MATERIAUX THERMOPLASTIQUES PAR SOUDAGE LASER PAR TRANSPARENCE, PROCEDE D'ASSEMBLAGE ET EMBOUT DE BRIDAGE ASSOCIE**
VORRICHTUNG ZUR MONTAGE ZWEIER TEILE AUS THERMOPLASTISCHEN MATERIALIEN MIT LASERTRANSPARENTEM SCHWEISSEN, MONTAGEVERFAHREN UND ZUGEHÖRIGES KLEMMSTÜCK
DEVICE FOR ASSEMBLING TWO PARTS MADE FROM THERMOPLASTIC MATERIALS BY MEANS OF LASER-TRANSPARENT WELDING, ASSEMBLY METHOD AND ASSOCIATED CLAMPING FITTING

(30) Priorité: 07.05.2010 FR 1053585
(43) Date de publication de la demande: 13.03.2013
(73) Titulaire: Renault S.A.S., 92100 Boulogne-Billancourt (FR)
(72) Inventeur: KERBIGUET, Jean Gilles, F-78150 Le Chesnay (FR); GUERMEUR, Herve, F-78250 Oinville (FR); TIRADO, Lucio, F-78170 La Celle Saint Cloud (FR)
(86) Numéro de dépôt international: PCT/FR2011/051032
(87) Numéro de publication internationale: WO 2011/138568

(56) Documents cités:
- EP-A1- 1 652 615
- DE-A1- 10 004 538
- DE-A1- 19 924 469
- DE-A1-102007 042 739
- JP-A- 2007 111 927
- JP-A- 2010 105 376
- US-A1- 2005 167 042
- BOBBYE BAYLIS ET AL: "Pyrometer measurements during laser welding of thermoplastic elastomers to polypropylene and of nylon to itself", SOCIETY OF PLASTICS ENGINEERS. ANNUAL TECHNICAL CONFERENCE (ANTEC). PROCEEDINGS, SOCIETY OF PLASTICS ENGINEERS, US, 1 janvier 2003 (2003-01-01), pages 1111-1115, XP002325211, ISSN: 1539-2252

## Description

### Domaine technique de l'invention

L'invention concerne un dispositif d'assemblage de deux pièces par soudage laser par transparence, une première pièce supérieure transparente étant positionnée sur une seconde pièce inférieure absorbante, l'ensemble des deux pièces étant positionné sur un support pour le soudage laser, le dispositif d'assemblage comportant un moyen de projection d'un faisceau laser sur la surface supérieure de ladite pièce supérieure et des moyens d'assemblage aptes à maintenir l'ensemble des deux pièces assemblées entre elles sur le support.

L'invention concerne également un procédé d'assemblage de deux pièces par soudage laser par transparence, une première pièce supérieure transparente étant positionnée sur une seconde pièce inférieure absorbante, les deux pièces étant positionnées sur un support pour le soudage laser et assemblées entre elles sur le support au moyen d'un tel dispositif d'assemblage.

L'invention concerne également un embout de bridage associé à un tel dispositif d'assemblage destiné au soudage laser par transparence de deux pièces, une première pièce supérieure transparente étant positionnée sur une seconde pièce inférieure absorbante, l'ensemble des deux pièces étant positionné sur un support pour le soudage laser.

### Etat de la technique

Il est apparu ces dernières années une demande importante de réduction du poids et du coût des pièces, notamment dans le domaine des composants pour l'industrie automobile. Plus particulièrement pour la réalisation d'un véhicule automobile, de nombreuses pièces en tôle sont nécessaires, lesdites pièces en tôle présentant des formes plus ou moins complexes, pour lesquelles il est nécessaire de prévoir des procédés d'assemblage complexes. Ainsi, il a été proposé d'utiliser des pièces en matériaux thermoplastiques, afin de réduire à la fois le poids de la pièce, mais aussi son coût. En parallèle, il a été proposé des améliorations aux procédés d'assemblage existants, en vu de les adapter à l'assemblage de pièces en matériaux thermoplastiques.

C'est le cas notamment des documents DE 199 24 469, US 2005/167042 et EP 1 652 615, qui décrivent des installations comprenant des dispositifs d'assemblage de pièces en matériaux thermoplastiques. Toutefois, de telles installations sont très lourdes en termes de machineries, complexes à utiliser et mettant en oeuvre des procédés d'assemblage très peu flexibles.

Le document US 2005/167042 divulgue un dispositif d'assemblage de deux pièces par soudage laser par transparence, une première pièce supérieure transparente étant positionnée sur une seconde pièce inférieure absorbante, l'ensemble des deux pièces étant positionné sur un support pour le soudage laser, le dispositif d'assemblage comportant un moyen de projection d'un faisceau laser sur la surface supérieure de ladite pièce supérieure et des moyens d'assemblage aptes à maintenir l'ensemble des deux pièces assemblées entre elles sur le support, dispositif dans lequel lesdits moyens d'assemblage comportent au moins des premiers moyens de bridage, des seconds moyens de bridage et un système de gestion. Le document US 2005/167042 divulgue également un procédé d'assemblage de deux pièces par soudage laser par transparence, une première pièce supérieure transparente étant positionnée sur une seconde pièce inférieure absorbante, les deux pièces étant positionnées sur un support pour le soudage laser et assemblées entre elles sur le support au moyen d'un dispositif d'assemblage, procédé comportant au moins une étape de soudage laser par transparence par l'intermédiaire d'un moyen de projection d'un faisceau laser au niveau d'une interface de soudage prédéterminée des deux pièces.

Un autre type de procédé d'assemblage laser est également décrit dans le document EP 1 777 057. Celui-ci décrit notamment une première pièce supérieure transparente à un faisceau laser, projeté sur la surface supérieure de la pièce, laquelle est positionnée sur une seconde pièce inférieure absorbante, ou opaque à la longueur d'onde particulière du faisceau laser projeté. Les deux pièces sont assemblées entre elles et positionnées sur un support pour le soudage laser. Une mise en pression contrôlée des deux pièces est également prévue tout le long d'une interface de soudage pendant que le rayon laser parcourt cette interface. La température de la pièce inférieure absorbante va alors s'élever jusqu'à la fusion et va fondre par diffusion le matériau transparent de la pièce supérieure, créant une soudure permanente lors de la phase de refroidissement.

C'est également le cas du procédé d'assemblage décrit dans le document EP 1 440 784, qui décrit notamment une mise en pression directe de la pièce supérieure sur la pièce inférieure par l'intermédiaire d'une boule de pression transparente au rayon laser et roulant le long de l'interface de soudage.

Toutefois, avec de tels procédés d'assemblage, un problème rencontré réside dans la nature des pièces à assembler, l'une étant souvent une pièce d'aspect, par exemple du type garniture intérieure de porte d'un véhicule automobile, qu'il ne faut absolument pas dégrader visuellement. Plus particulièrement, le chargement et l'empilage des pièces sur le support du dispositif d'assemblage consistent à placer d'abord la pièce absorbante, ou souple, et ensuite la pièce transparente, ou rigide. Or, avec un dispositif d'assemblage classique, comme décrit notamment dans le document EP 1 440 784, la mise en pression des pièces est alors réalisée du côté de la pièce rigide, à savoir la pièce d'aspect dans le cas décrit ci-dessus. Il en résulte notamment un risque majeur de marquage de la pièce, générant des défauts en termes de qualité perçue.

Par ailleurs, il ressort également des problèmes en termes de fiabilité et de facilité de montage, de bridage et de fixation des pièces ensembles. De même, la mise en pression contrôlée décrite dans le document EP 1 777 057 n'est pas optimale, car elle nécessite beaucoup de pièces, ce qui complexifie et augmente le prix considérablement d'un tel dispositif d'assemblage. Par ailleurs, la mise en pression par une boule décrite dans le document EP 1 440 784 ne permet pas une grande flexibilité dans le choix des dimensions et des matériaux des pièces à assembler.

### Objet de l'invention

L'invention a pour but de remédier à l'ensemble des inconvénients précités et a pour objet la réalisation d'un dispositif d'assemblage, selon la revendication 1, de deux pièces, plus particulièrement de deux pièces en matériaux thermoplastiques, qui soit simple, efficace et rapide, qui garantisse une qualité de soudure optimale, tout en permettant une grande flexibilité selon les pièces à assembler. Lesdits moyens d'assemblage comportent au moins :
- des premiers moyens de bridage qui comportent une pluralité d'organes mobiles, aptes à être actionnés indépendamment les uns des autres au niveau d'une interface de soudage prédéterminée des deux pièces, destinés à assurer le référencement géométrique de l'ensemble des deux pièces positionné sur ledit support,
- des seconds moyens de bridage, destinés à exercer un effort prédéterminé contre l'ensemble des deux pièces positionné sur ledit support,
- et un système de gestion, associé aux dits seconds moyens de bridage et destiné à régler ledit effort exercé par lesdits seconds moyens de bridage au niveau de ladite interface de soudage.

Un tel dispositif d'assemblage, avec des moyens de bridage spécifiques pour le référencement des pièces et pour l'application d'un effort, permet notamment d'optimiser l'assemblage des deux pièces ensemble et d'assurer un accostage parfait des deux pièces au niveau de l'interface de soudage.

D'autres avantages et caractéristiques de l'invention peuvent être considérés isolément ou en combinaison.

Lesdits organes mobiles peuvent être actionnés indépendamment les uns des autres au niveau de ladite interface de soudage, manuellement ou automatiquement.

Le faisceau laser étant projeté selon un axe sensiblement perpendiculaire à ladite interface de soudage, lesdits premiers moyens de bridage peuvent être actionnés selon une direction parallèle audit axe de projection du faisceau laser.

De tels moyens de bridage complètement indépendants les uns des autres le long de l'interface de soudage permettent notamment un référencement géométrique optimal des deux pièces, assurant ainsi un bon accostage des pièces au niveau de l'interface de soudage. De tels moyens de bridage pouvant se régler indépendamment les uns des autres permettent aussi en réglage en trois dimensions le long de l'interface de soudage, offrant ainsi une distribution des efforts et une mise en contrainte totalement optimisées selon la conformation et le type des pièces à assembler.

Lesdits seconds moyens de bridage peuvent être reliés à une interface de fixation mécanique, de sorte à positionner lesdits seconds moyens de bridage en regard d'une extrémité dudit moyen de projection du faisceau laser.

Lesdits seconds moyens de bridage peuvent comporter un embout de bridage muni d'au moins un doigt d'application, par exemple quatre doigts d'application sensiblement parallèles, agencés de sorte à être positionnés sensiblement aux quatre coins d'un carré et pouvant comporter un embout sensiblement arrondi.

De tels moyens de bridage embarqués sur une platine de fixation solidaire du moyen de projection du faisceau laser permettent notamment d'alléger le dispositif d'assemblage en supprimant des moyens de bridage supplémentaires et en intégrant la fonction d'application d'un effort dans l'embout de bridage qui parcourt l'interface de soudage.

Lesdits seconds moyens de bridage peuvent comporter des moyens de refroidissement associés.

De tels moyens de refroidissement permettent notamment de refroidir l'embout de bridage, en contact avec la surface supérieure de la pièce supérieure lors du procédé d'assemblage associé.

Dans une première variante, ledit système de gestion de l'effort peut comporter des moyens de réglage, associés audit moyen de projection du faisceau laser, de sorte à maintenir ledit effort prédéterminé constant au niveau de l'interface de soudage et à maintenir une distance focale constante entre ladite interface de soudage et ledit moyen de projection du faisceau laser.

Dans une seconde variante, ledit système de gestion de l'effort peut comporter des moyens d'asservissement, associés audit moyen de projection du faisceau laser, de sorte à régler ledit effort prédéterminé en continu au niveau de l'interface de soudage et à maintenir une distance focale constante entre ladite interface de soudage et ledit moyen de projection du faisceau laser.

De tels systèmes de gestion de l'effort permettent notamment de régler l'effort nécessaire et suffisant au niveau de l'interface de soudage tout le long du procédé d'assemblage, afin d'assurer une qualité de soudure optimale.

Le dispositif d'assemblage peut comporter un moyen d'apport d'air, destiné à projeter un flux d'air au niveau de la surface supérieure de ladite pièce supérieure simultanément au faisceau laser.

Ledit moyen de projection du faisceau laser étant muni d'un cône de projection, ledit moyen d'apport d'air peut être relié audit cône de projection, lequel joue le rôle d'un cône de canalisation du flux d'air, de sorte à obtenir un flux d'air maîtrisé au niveau de la surface supérieure de ladite pièce supérieure.

Un tel moyen d'apport d'air maîtrisé permet notamment d'éviter un phénomène de carbonisation (comme décrit ci-après) à la surface des pièces assemblées. Un tel moyen d'apport d'air permet également de maintenir avantageusement une température pas trop élevée au niveau de l'embout de bridage placé en regard du moyen de projection du faisceau laser pendant le procédé d'assemblage associé.

L'invention a également pour objet la réalisation d'un procédé d'assemblage, selon la revendication 13, par soudage laser par transparence, qui permette de souder de façon simple, rapide et efficace deux pièces en matériaux thermoplastiques, en évitant tous les problèmes et inconvénients cités ci-dessus. Le procédé comporte au moins :
- une étape de référencement géométrique de l'ensemble des deux pièces positionné sur ledit support par des premiers moyens de bridage qui comportent une pluralité d'organes mobiles, en actionnant lesdits organes mobiles indépendamment les uns des autres au niveau d'une interface de soudage prédéterminée des deux pièces,
- une étape de conformation de l'ensemble des deux pièces positionné sur le support par des seconds moyens de bridage, associés à un système de gestion d'un effort prédéterminé, apte à maîtriser ledit effort exercé par lesdits seconds moyens de bridage contre l'ensemble des deux pièces positionné sur ledit support, et
- une étape de soudage laser par transparence par l'intermédiaire d'un moyen de projection d'un faisceau laser au niveau de ladite interface de soudage.

Un tel procédé de soudage laser permet donc de façon simple et rapide d'assembler deux pièces en matériaux thermoplastiques.

D'autres avantages et caractéristiques de l'invention peuvent être considérés isolément ou en combinaison.

Notamment, ladite étape de conformation de l'ensemble des deux pièces peut être réalisée simultanément à l'étape de soudage laser, au niveau de l'interface de soudage, par lesdits seconds moyens de bridage en contact avec la surface supérieure de la pièce supérieure.

Un tel maintien dynamique de l'ensemble des deux pièces sur le support permet d'assurer un accostage parfait au niveau de l'interface de soudage tout le long du parcours du faisceau laser.

Un effort prédéterminé constant peut être appliqué par lesdits seconds moyens de bridage contre la surface supérieure de la pièce supérieure, lors de ladite étape de soudage laser, ou un effort prédéterminé variable peut être appliqué contre la surface supérieure de la pièce supérieure, lors de ladite étape de soudage laser, par l'intermédiaire de moyens d'asservissement dudit système de gestion de l'effort associé aux dits seconds moyens de bridage.

Un tel système de gestion de l'effort permet donc selon le cas d'appliquer un effort constant fixé au préalable avant le début du procédé d'assemblage ou de régler l'effort en dynamique pendant l'étape de soudage laser, de sorte à maintenir une distance focale constante entre le moyen de projection du faisceau laser et l'interface de soudage.

Le procédé d'assemblage peut comporter simultanément à ladite étape de soudage laser, une étape de projection d'un flux d'air maîtrisé au niveau de la surface supérieure de ladite pièce supérieure.

Une telle étape de projection d'air simultanément à l'étape de soudage laser permet notamment, d'une part, de ne pas dégrader la surface des pièces assemblées en empêchant un phénomène de carbonisation à la surface des pièces et, d'autre part, de refroidir l'embout de bridage embarqué en appui contre la surface supérieure de la pièce supérieure.

L'invention a encore pour objet la réalisation d'un embout de bridage associés au dispositif d'assemblage pour le soudage laser par transparence, qui permette d'appliquer un effort prédéterminé sur les pièces à assembler de façon simple et efficace, en évitant tous les problèmes et inconvénients cités ci-dessus, notamment de marquage des pièces. L'embout de bridage comporte au moins un doigt d'application destiné à exercer un effort prédéterminé contre l'ensemble des deux pièces positionné sur ledit support. Chaque doigt d'application comporte une section sensiblement arrondie et un embout sensiblement bombé.

Un tel embout de bridage permet ainsi une application directe sur la pièce supérieure d'un effort prédéterminé et en continu pendant tout le temps de l'étape de soudage laser du procédé d'assemblage associé.

D'autres avantages et caractéristiques de l'invention peuvent être considérés isolément ou en combinaison.

Notamment, l'embout de bridage peut comporter quatre doigts d'application sensiblement parallèles, agencés de sorte à être positionnés sensiblement aux quatre coins d'un carré.

De telles caractéristiques de l'embout de bridage permettent notamment une application de l'effort optimale, tout en évitant le marquage de la pièce supérieure.

L'embout de bridage comportant plusieurs doigts d'application, l'embout de bridage peut comporter au moins une paroi pleine reliant les doigts d'application, de sorte à former des interstices entre les doigts d'application.

Une telle paroi permet ainsi de rigidifier l'embout de bridage et les interstices formés permettent notamment d'améliorer le refroidissement de l'embout de bridage lors de l'étape de soudage laser du procédé d'assemblage associé.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente schématiquement une vue partielle de face, selon la coupe A-A de la figure 2, d'un mode particulier de réalisation d'un dispositif d'assemblage selon l'invention.
La figure 2 représente schématiquement une vue partielle de côté du dispositif d'assemblage selon la figure 1.
La figure 3 représente schématiquement une vue partielle de côté d'une variante de réalisation d'un dispositif d'assemblage selon l'invention, représentée sans le support.
La figure 4 représente une vue en perspective partielle d'un exemple particulier d'application du dispositif d'assemblage selon les figures 1 à 3, pour deux pièces en matériaux thermoplastiques de type porte de coffre pour véhicule automobile.
Les figures 5a et 5b représentent, respectivement, une vue en perspective d'un mode particulier de réalisation d'un embout de bridage selon l'invention, associé au dispositif d'assemblage selon les figures 1 à 4, et une vue du détail B de l'extrémité de l'embout de bridage selon la figure 5a.
Les figures 6a et 6b représentent très schématiquement l'extrémité de variantes de réalisation d'un embout de bridage selon l'invention associé au dispositif d'assemblage selon les figures 1 à 4. La figure 7 représente schématiquement une vue en perspective partielle des moyens de bridage du dispositif d'assemblage selon les figures 1 à 4.

### Description de modes particuliers de réalisation

En référence aux figures, le dispositif d'assemblage 10 selon l'invention est destiné à l'assemblage de deux pièces en matériaux thermoplastiques par soudage laser par transparence. Le dispositif d'assemblage 10 selon l'invention prend en compte plus particulièrement les contraintes qui sont liées au matériau des pièces à assembler et qui sont liées au procédé de soudage laser associé, à savoir les matériaux et leur différence de rigidité, le fait que l'une des deux pièces soit, par exemple, une pièce d'aspect et que l'accostage soit nécessairement parfait à l'interface de soudage des deux pièces. Plus particulièrement, le dispositif d'assemblage 10 selon l'invention est, par exemple, destiné à assembler une porte de coffre d'un véhicule automobile.

Dans la description qui va suivre, on utilisera à titre non limitatif les expressions telles que « arrière » et « avant », « gauche » et « droite », « supérieur » et « inférieur » et les orientations « longitudinale », « transversale » et « verticale » en référence au trièdre de référence X, Y, Z, représenté aux figures et aux définitions données dans la description.

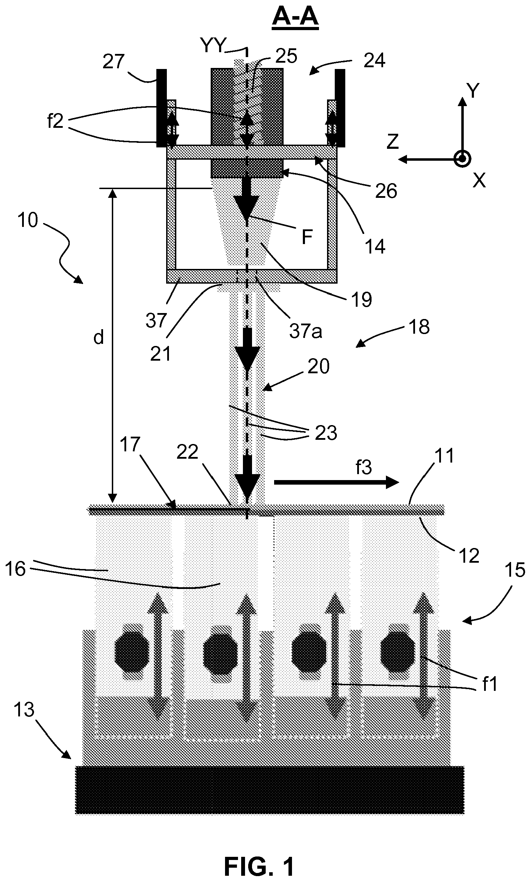

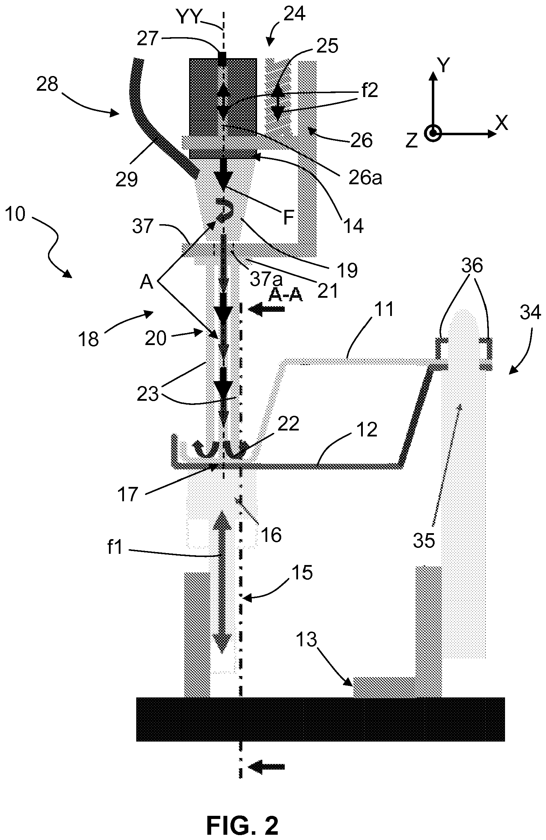

Dans le premier mode de réalisation représenté sur les figures 1 et 2, le dispositif d'assemblage 10 selon l'invention est destiné à l'assemblage de deux pièces 11, 12 en matériaux thermoplastiques. Plus particulièrement, les deux pièces 11, 12 sont positionnées sur un support 13, réglé de sorte à recevoir de façon stable les deux pièces 11, 12 dans le respect de la géométrie souhaitée pour les pièces 11, 12. Le dispositif d'assemblage 10 comporte un moyen de projection 14 d'un faisceau laser, destiné à projeter un faisceau laser F sur l'assemblage des deux pièces 11, 12, Plus particulièrement, la pièce supérieure 11 transparente au faisceau laser F est, de préférence, une pièce rigide et la pièce inférieure 12 absorbante est, de préférence, une pièce souple. L'interface entre la pièce inférieure 12 et la pièce supérieure 11 est destinée à être chauffée par le faisceau laser F jusqu'à la fusion de la pièce inférieure 12 absorbante, afin de fondre par diffusion le matériau transparent de la pièce supérieure 11, créant ainsi une soudure permanente lors de la phase de refroidissement.

Par ailleurs, le dispositif d'assemblage 10 comporte des premiers moyens de bridage 15 inférieurs, c'est-à-dire aptes en venir en appui contre la surface inférieure de la pièce inférieure 12, comportant une pluralité d'organes mobiles 16, répartis tout le long du périmètre des pièces 11, 12 à assembler, plus précisément tout le long d'une interface de soudage 17 prédéterminée, ou piste de soudage, au niveau de laquelle s'effectue le soudage des deux pièces 11, 12.

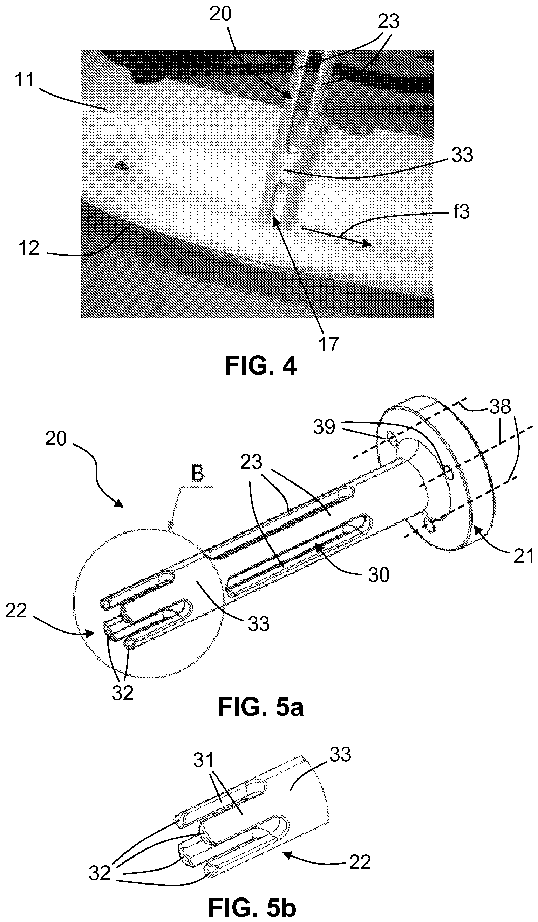

Par interface de soudage 17, ou piste de soudage, il faut comprendre ici l'interface de contact entre les deux pièces 11, 12, à savoir l'ensemble des zones correspondant aux parties accostées des deux pièces 11, 12 destinées à être soudées. C'est-à-dire, dans le cas de pièces complexes du type panneau de porte ou de coffre d'un véhicule automobile, cela correspond sensiblement aux bords des pièces 11, 12, comme représentées sur les figures 2 et 4, mais également aux parties en contact des deux pièces 11, 12 situées plus vers l'intérieur ou le centre des pièces 11, 12. De même, l'interface de soudage 17 comporte, de préférence, aucune surépaisseur du type marquage ou défaut de surface et aucune sous-épaisseur, du type résultant des empruntes d'éjecteurs de moules. D'une façon générale, l'interface de soudage 17 entre les pièces 11, 12, à savoir l'ensemble des zones à souder correspondant au passage du faisceau laser, doit être le plus lisse possible, sans défaut de surface ni en creux ni en bosse.

De tels moyens de bridage 15 inférieurs ont pour fonction principal d'assurer le référencement géométrique de l'ensemble des deux pièces 11, 12 positionnées sur le support 13 du dispositif d'assemblage 10 selon l'invention. Un tel référencement géométrique a notamment pour but de placer les pièces 11, 12 dans une configuration telle qu'elles épousent parfaitement la forme de la pièce de référence, à savoir la pièce rigide, afin de garantir l'accostage et la géométrie souhaitée des deux pièces 11, 12 (figures 1 à 3 et 7).

A titre d'exemple, comme représenté sur les figures 1 et 2, les organes mobiles 16, par exemple du type vis, touches, doigts, platines, etc., sont montés à déplacement indépendamment les uns des autres selon la flèche f1, parallèle à l'axe vertical Y des figures 1 et 2. D'une façon générale, chaque organe mobile 16 est monté à déplacement indépendamment des autres et perpendiculairement à la surface inférieure de la pièce inférieure 12, plus particulièrement à l'interface de soudage 17 des deux pièces 11, 12 et donc parallèlement à un axe YY de projection du faisceau laser F.

Par ailleurs, les organes mobiles 16 peuvent être actionnés manuellement, la position de chaque organe mobile 16 étant réglée avant le départ de l'étape de soudage laser du procédé d'assemblage associé, ou peuvent être actionnés automatiquement par tout type de moyen d'actionnement approprié (du type électrique, pneumatique, etc.) associé au dispositif d'assemblage 10 selon l'invention.

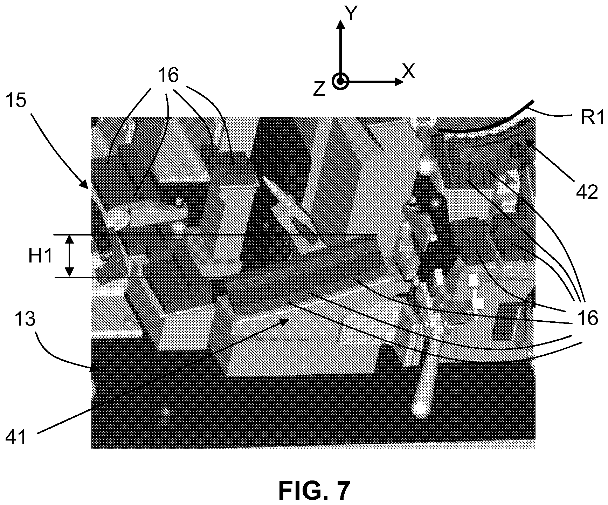

Par ailleurs, comme représenté plus particulièrement sur la figure 7, les organes mobiles 16 des moyens de bridage 15 sont agencés sur le support 13 de sorte à pouvoir être orientés selon les trois dimensions représentées schématiquement par le trièdre de référence X, Y, Z. Comme indiqué précédemment, l'interface de soudage 17 des pièces 11, 12 destinées à être assemblées comprend non seulement le bord des pièces 11, 12, mais également des portions de pièces situées plus vers le centre. Notamment, comme représenté sur les figures 1, 2 et 4, les pièces 11, 12 à assembler ne sont pas des plaques planes uniformes mais des pièces préformées, dont l'interface de soudage 17 comprend des portions à différentes hauteurs selon le trièdre X, Y, Z.

Sur la figure 7, le support 13 est ainsi équipé d'une multitude d'organes mobiles 16 répartis tout le long de l'interface de soudage 17 et dont la position est réglée selon la forme des pièces 11, 12 à assembler. A titre d'exemple, les moyens de bridage 15 comportent, par exemple, une première barrette 41 d'organes mobiles 16, associés au bord des pièces 11, 12 et juxtaposés les uns à côté des autres mais décalés en hauteur, de sorte à former une pente de hauteur H1.

Encore à titre d'exemple, les moyens de bridage 15 comportent également une seconde barrette 42 formée d'une pluralité d'organes mobiles 16 agencés de sorte à former un arc de cercle avec un rayon de courbure R1, correspondant à une conformation particulière des pièces 11, 12 à assembler.

D'une façon générale, les moyens de bridage 15 présentent ainsi une multitude d'organes mobiles 16 agencés de façon complètement indépendante les uns des autres et pouvant se déplacer selon les trois axes du trièdre X, Y et Z, de sorte à s'adapter parfaitement à la forme des pièces 11, 12 à assembler. De tels moyens de bridage permettent ainsi une grande flexibilité selon les pièces à assembler, uniquement le réglage des organes mobiles étant nécessaire en cas de changement des pièces 11, 12 à assembler ou en cas d'ajustement des efforts à effectuer.

Sur les figures 1 et 2, le dispositif d'assemblage 10 selon l'invention comporte également des seconds moyens de bridage 18 supérieurs, c'est-à-dire aptes à venir en appui contre la surface supérieure de la pièce supérieure 11. Les moyens de bridage 18 supérieurs ont pour fonction principale d'exercer un effort prédéterminé contre l'ensemble des deux pièces 11, 12 assemblées sur le support 13, tout le long de l'interface de soudage 17, comme décrite ci-dessus. D'une façon générale, l'effort prédéterminé exercé par les seconds moyens de bridage 18 doit être calculé de sorte à être nécessaire et suffisant au bon accostage des deux pièces 11, 12, tout le temps de l'étape de soudage laser du procédé d'assemblage associé.

A titre d'exemple, l'extrémité du moyen de projection 14 du faisceau laser F a, de préférence, la forme d'un cône 19 de projection du faisceau laser F et les seconds moyens de bridage 18 comportent un embout de bridage 20 (figures 4, 5a et 5b) relié solidairement à une platine de fixation 37. Plus particulièrement, l'embout de bridage 20 est solidaire de la platine de fixation 37, de sorte à placer l'embout de bridage 20 sensiblement en regard du cône 19 de projection du faisceau laser F, avec un léger jeu de l'ordre de quelques dixièmes de millimètres (le jeu étant volontairement accentué sur les figures 1 et 2 pour des raisons de clarté). La platine de fixation 37 comporte alors, de préférence, un orifice 37a (représenté en traits pointillés sur les figures 1 et 2), dont les dimensions sont aptes à laisser passer le faisceau laser F à travers la platine de fixation 37.

Dans cette configuration, la platine de fixation 37 joue alors le rôle d'une interface de fixation mécanique entre le cône 19 de projection et l'embout de bridage 20, permettant ainsi de reprendre les efforts résultant de l'application de l'effort prédéterminé sur la surface supérieure de la pièce supérieure 11 par l'embout de bridage 20. Cette reprise d'effort par la platine de fixation 37 permet notamment de ne pas solliciter le moyen de projection 14 du faisceau laser et d'éviter toute casse ou remplacement de cette pièce, qui s'avèrerait beaucoup plus coûteux que le remplacement de l'embout de bridage 20 uniquement.

Dans le mode particulier représenté sur les figures 1 et 2, l'embout de bridage 20 selon l'invention est embarqué sur la platine de fixation 37 et relié, à une première extrémité 21, à la platine de fixation 37 et destiné à venir en appui sur la surface supérieure de la pièce supérieure 11, à une seconde extrémité 22, par l'intermédiaire d'au moins un doigt d'application 23, en contact avec la surface supérieure de la pièce supérieure 11 (figure 1). Comme représenté sur les figures 4, 5a et 5b, le mode particulier de réalisation l'embout de bridage 20 selon l'invention est muni, de préférence, de quatre doigts d'application 23 (dont uniquement trois sont représentés schématiquement sur les figures 1 et 2 pour des raisons de clarté). Les doigts d'application 23 de l'embout de bridage 20 sont parallèles entre eux et agencés les uns par rapport aux autres, de sorte à se positionner sensiblement aux quatre coins d'un carré, c'est-à-dire de sorte à appliquer ledit effort prédéterminé sur la surface supérieure de la pièce supérieure 11 au niveau de quatre zones géométriques précises réparties en carré.

Par ailleurs, l'embout de bridage 20 est fixé sur la platine de fixation 37, par exemple, au moyen de trois vis, représentées schématiquement par leurs axes de référence 38 sur la figure 5a, destinées à s'insérer dans des trous 39 correspondants réalisés dans la première extrémité 21 de l'embout de bridage 20 (figure 5a).

De même, la platine de fixation 37 est solidaire, par exemple, d'un portique 26, faisant également office d'interface mécanique, lui-même solidaire du moyen de projection 14 du faisceau laser F. L'ensemble composé du portique 26, du moyen de projection 14 du faisceau laser, de la platine de fixation 37 et de l'embout de bridage 20 est alors monté à déplacement par rapport à un élément ou organe 27 jouant le rôle d'interface mécanique de fixation de l'ensemble sur la tête d'un robot de soudage de type classique (non représenté sur les figures pour des raisons de clarté).

Par ailleurs, le dispositif d'assemblage 10 comporte avantageusement un système de gestion 24 d'effort, associé au moyen de projection 14 du faisceau laser F et plus particulièrement à l'embout de bridage 20, destiné à contrôler et maîtriser l'effort prédéterminé exercé par les doigts d'application 23 de l'embout de bridage 20 sur la surface supérieure de la pièce supérieure 11, et donc au niveau de l'interface de soudage 17 des deux pièces 11, 12. Un tel système de gestion 24 de l'effort a pour but de maintenir l'effort prédéterminé constant, au niveau de l'interface de soudage 17, et à maintenir la distance focale d constante entre l'interface de soudage 17 et le moyen de projection 14 du faisceau laser F (figure 1). De cette façon, le moyen de projection 14 du faisceau laser F est positionné en continu à la même distance focale d de l'interface de soudage 17, et ce pendant tout la durée de l'étape de soudage laser du procédé d'assemblage associé.

Dans l'exemple particulier représenté sur les figures 1 et 2, le système de gestion 24 de l'effort comprend, par exemple, un ressort 25, aménagé parallèlement à l'axe vertical du moyen de projection 14 du faisceau laser F, et donc du cône 19 de projection du faisceau laser F (et donc de l'axe YY de projection du faisceau laser F), et relié au portique 26, lequel coulisse selon les flèches f2 par rapport à l'interface mécanique 27.

Comme représenté plus particulièrement sur la figure 2, illustrant le dispositif d'assemblage de la figure 1 selon une vue de côté, le ressort 25 du système de gestion 24 est, par exemple, décalé par rapport à l'axe de projection YY du faisceau laser F, sur le côté du moyen de projection 14 du faisceau laser F. Le portique 26 comporte, par exemple, une branche parallèle à la platine de fixation 37, sur laquelle une tige 26a est montée dans l'axe du moyen de projection 14 du faisceau laser F, le portique 26 étant monté à coulissement selon les flèches f2 par rapport à l'interface mécanique 27 fixe du robot de soudage laser associé.

Un tel système de gestion 24 de l'effort est destiné, d'une part, à conserver une distance focale d constante entre le moyen de projection 14 du faisceau laser F et l'interface de soudage 17 et, d'autre part, à fixer au préalable, c'est-à-dire au début du procédé de soudage laser associé, la valeur de l'effort, notamment grâce au ressort 25, et à la maintenir constante tout le long de l'étape de soudage laser, pendant le parcours de l'interface de soudage 17. Il en résulte ainsi une qualité de soudage optimale au niveau de l'interface de soudage 17.

Par ailleurs, comme représenté plus particulièrement sur la figure 2, le dispositif d'assemblage 10 selon l'invention comporte avantageusement un moyen de projection d'air 28 (représenté uniquement sur la figure 2 pour des raisons de clarté), associé au moyen de projection 14 du faisceau laser F et destiné à projeter un flux d'air A simultanément avec le faisceau laser F. Un tel apport d'air, projeté parallèlement au faisceau laser F et selon le même axe de référence YY (figure 2), a pour fonction principale d'empêcher un phénomène de carbonisation qui peut apparaître à la surface supérieure de la pièce supérieure 11, uniquement dans le cas de certains matériaux et selon leur pourcentage de transparence (coefficient de transparence ou taux de transparence).

En effet, un phénomène de carbonisation peut apparaître à la surface des pièces soudées, en cas de mauvaise soudure, à savoir quand la pièce supérieure 11 a trop chauffée et carbonise, rendant la pièce supérieure 11 absorbante. Dans ce cas, il n'y a pas de soudage à l'interface de soudage 17, car la pièce supérieure 11 n'est plus transparente. Le flux d'air A, dont la puissance de projection dépend ainsi des caractéristiques plus ou moins transparentes de la pièce supérieure 11, permet ainsi d'empêcher complètement ce phénomène de carbonisation, afin d'assurer une qualité de soudure optimale.

A titre d'exemple, comme représenté plus particulièrement sur la figure 2, le moyen de projection et d'apport 28 du flux d'air A comporte un tuyau 29 d'amenée d'air relié à une source d'air (non représentée) et au cône 19 de projection du faisceau laser F. Le cône 19 de projection du faisceau laser F fait alors office de cône de canalisation du flux d'air A, de sorte notamment, pendant le procédé de soudage laser associé, à obtenir un flux d'air A maîtrisé et calculé pour éviter le phénomène de carbonisation à la surface des pièces 11, 12, comme décrit ci-dessus.

Par ailleurs, l'embout de bridage 20 étant positionné en regard du cône 19 de projection du faisceau laser F, et donc de canalisation du flux d'air, le moyen de projection du flux d'air 28 permet avantageusement de refroidir, tout du moins, de maintenir une température acceptable au niveau de l'embout de bridage 20. En effet, pendant la projection du faisceau laser F, lors du procédé d'assemblage associé, le faisceau laser F et le flux d'air A sont projetés simultanément entre les doigts d'application 23 de l'embout de bridage 20 (figures 4, 5a et 5b).

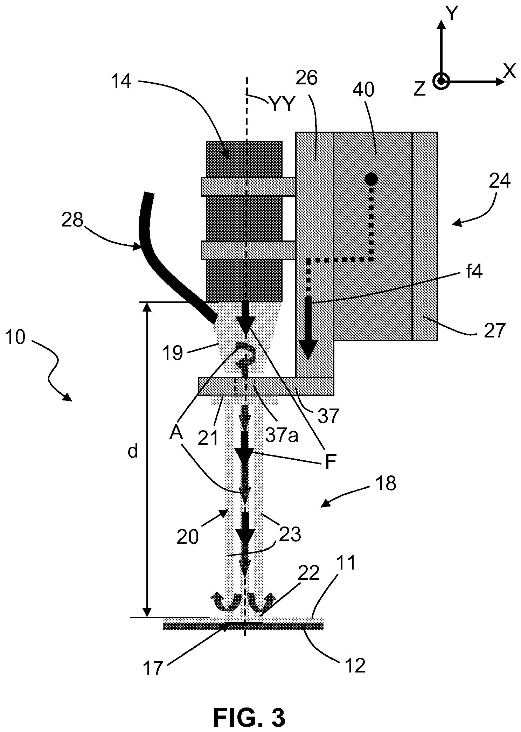

Dans la variante de réalisation représentée sur la figure 3, le dispositif d'assemblage 10 selon l'invention se distingue du dispositif d'assemblage représenté sur les figures 1 et 2 par le système de gestion 24 de l'effort appliqué par l'embout de bridage 20 selon l'invention sur la surface supérieure de la pièce supérieure 11. Sur la figure 3, le système de gestion 24 de l'effort comporte des moyens d'asservissement 40 permettant la gestion et la distribution de l'effort en dynamique, c'est-à-dire pouvant être modifié et réglé tout le long du parcours de l'interface de soudage 17 lors de l'étape de soudage laser du procédé d'assemblage associé.

Sur la figure 3, les moyens d'asservissement du système de gestion 24 comportent, par exemple, un vérin 40 relié, d'une part, au portique 26, et donc à la platine de fixation 37 et au moyen de projection 14 du faisceau laser F, et, d'autre part, à l'interface de fixation 27 du robot de soudage associé (non représenté pour des raisons de clarté). Le vérin asservi 40 permet ainsi à l'ensemble constitué par le moyen de projection 14 du faisceau laser F, le portique 26, la platine de fixation 37 et l'embout de bridage 20 de se déplacer selon la flèche f4 par rapport à l'interface 27 de fixation pendant l'étape de soudage, de sorte à régler l'effort appliqué en continu.

De tels moyens d'asservissement 40 permettent donc de maintenir de façon dynamique, tout le long de l'étape de soudage laser du procédé d'assemblage associé, ledit effort prédéterminé au niveau de l'interface de soudage 17 des pièces 11, 12 assemblées, tout en assurant le maintien de la distance focale d constante.

Par ailleurs, dans la variante de réalisation représentée sur la figure 3, le dispositif d'assemblage 10 comporte également le moyen de projection 28 du flux d'air A, simultanément au faisceau laser F, sensiblement au centre des doigts d'application 23 de l'embout de bridage 20, de sorte à empêcher le phénomène de carbonisation à la surface supérieure de la pièce supérieure 11.

Quel que soit le mode de réalisation du dispositif d'assemblage 10, comme représenté sur les figures 1 à 4, les deux pièces 11, 12 à assembler sont en matériaux thermoplastiques, par exemple du polypropylène. D'une façon générale, les pièces 11, 12 à assembler peuvent être réalisées en tout matériau thermoplastique, par exemple du polyamide, tant que le matériau choisi présente des caractéristiques optimales en termes de solidité, de coût, de recyclage et de bonne aptitude au soudage laser, à savoir transparence, etc. Plus particulièrement, la pièce supérieure 11 transparente peut être une pièce en matériaux polymères chargée de fibres de verres.

D'une façon générale, la pièce supérieure 11 peut être rigide ou souple, en un matériau plus ou moins chargé en fibres de verre, tant qu'elle est transparente au faisceau laser F, pour permettre le soudage à l'interface de soudage 17, et la pièce inférieure peut être rigide ou souple, tant qu'elle est absorbante au faisceau laser. En effet, comme représenté plus particulièrement sur la figure 4, le dispositif d'assemblage 10 est destiné plus particulièrement à l'assemblage d'un ouvrant, par exemple du type porte de coffre, d'un véhicule automobile. Dans ce cas, une des deux pièces à assembler est classiquement une pièce d'aspect, l'embout de bridage 20 ne doit donc pas être en contact avec elle, afin d'éviter tout marquage ou défaut de surface dû au contact entre l'embout de bridage 20 et la surface supérieure de la pièce.

Dans les différentes configurations représentées sur les figures 1 à 3, la pièce supérieure 11 ne sera donc jamais une pièce d'aspect. Comme représenté plus particulièrement sur la figure 4, la pièce inférieure 12 est donc la pièce d'aspect de l'ensemble des deux pièces 11, 12 et l'embout de bridage 20 selon l'invention du dispositif d'assemblage 10 selon les figures 1 à 3 vient parcourir l'interface de soudage 17, en appui sur la surface supérieure de la pièce supérieure 11, laquelle n'est donc pas la pièce d'aspect.

Par ailleurs, comme représenté plus particulièrement sur les figures 4, 5a et 5b, l'embout de bridage 20 comporte, par exemple, quatre doigts d'application 23, lesquels sont placés de sorte à ce que l'embout de bridage 20 se déplace selon le sens de soudage défini par la flèche f3 de la figure 4 avec deux doigts d'application 23 perpendiculaires au sens de déplacement de l'embout de bridage 20 (figure 4).

Comme représenté plus en détails sur les figures 5a et 5b, chaque doigt d'application 23 de l'embout de bridage 20 comporte une section 31 sensiblement arrondie et un embout 32 sensiblement bombé ou arrondi, de sorte notamment à éviter de marquer la surface supérieure de la pièce supérieure 11, lors de l'étape de soudage laser du procédé d'assemblage associé. Par ailleurs, les doigts d'application 23 de l'embout de bridage 20 sont avantageusement reliés par au moins une paroi pleine 33, jouant le rôle d'une portion de rigidification de l'embout de bridage 20. D'une façon générale, la longueur de l'embout de bridage 20 est la plus faible possible, pour des raisons de résistance des matériaux, la longueur étant calculée, de préférence, pour éviter une casse de l'embout de bridage 20. Par ailleurs, une telle paroi 33 de rigidification permet avantageusement de bloquer les calories engendrées par la réflexion du faisceau laser F sur les doigts d'application 23 de l'embout de bridage 20 lors de l'étape de soudage du procédé d'assemblage associé.

Par ailleurs, l'embout de bridage 20 est avantageusement relié à des moyens de refroidissement (non représentés sur les figures pour des raisons de clarté), destinés à refroidir l'embout de bridage 20 et plus particulièrement les doigts d'application 23, lorsqu'ils sont utilisés lors de l'étape de soudage laser du procédé d'assemblage associé. A titre d'exemple, les moyens de refroidissement comportent un tuyau, ou une canalisation, inséré dans la portion 33 ou dans une autre zone de l'embout de bridage 20, et relié à un réservoir de liquide de refroidissement, par exemple de l'eau. Il en résulte un écoulement du liquide de refroidissement en continu dans le tuyau, lequel engendre ainsi un refroidissement en continu des doigts d'application 23 de l'embout de bridage 20, pendant le procédé d'assemblage associé.

De même, des interstices 30 formés entre les doigts d'application 23 de l'embout de bridage 20 permettent un bon écoulement du flux d'air A et les embouts 32 des doigts d'application 23 présentent une forme optimisée au mieux pour permettre le passage du faisceau laser F.

Par ailleurs, quel que soit le mode de réalisation du dispositif d'assemblage 10 selon l'invention (figures 1 à 3), celui-ci comporte également des moyens de bridage minimal 34 (figure 2), ou moyens de mise en référence géométrique, destinés à bloquer les pièces 11, 12 sur le support 13, pendant l'étape de soudage. A titre d'exemple, le support 13 comporte un pilier 35, ou pilote de référence ou standard de pilotage, sur lequel sont montées les pièces 11, 12, et des pinces de verrouillage 36, associées au pilier 35 et destinées à maintenir l'ensemble des pièces 11, 12 assemblées sur le support 13. De tels moyens de bridage minimal 34 permettent notamment de maintenir globalement l'ensemble des deux pièces 11, 12 assemblées sur le support 13 et éviter, par exemple, tout soulèvement ou décalage d'un côté des deux pièces 11, 12 assemblées, lors du soudage laser à l'opposé de ce côté.

Quel que soit le mode de réalisation du dispositif d'assemblage 10 selon les figures 1 à 4, celui-ci a donc pour avantage principal d'assurer un référencement géométrique et une conformation des deux pièces assemblées simples, efficaces et rapides, tout en garantissant un accostage optimal des pièces au niveau de l'interface de soudage. Notamment, un tel système de bridage embarqué, constitué par l'embout de bridage fixé sur une platine de fixation en regard de l'extrémité du moyen de projection du faisceau laser et en appui sur la surface supérieure de la pièce supérieure, permet ainsi de supprimer des moyens d'outillage et de bridage, générant des gains en termes de complexité et d'investissement.

Par ailleurs, de tels moyens de bridage embarqués offrent une grande flexibilité dans l'utilisation du dispositif d'assemblage selon l'invention, notamment du fait de l'accostage et des moyens de bridage supérieur qui sont gérés via un système de gestion de l'effort permettant de gérer l'effort de pression appliqué sur les pièces de façon statique (figures 1 et 2) ou dynamique (figure 3) et donc la distance focale d. Ainsi, uniquement l'embout de bridage fixé sur une platine de fixation peut être remplacé et changé en cas de casse ou en fonction des pièces ou du procédé d'assemblage associé, de sorte qu'il offre une interchangeabilité et une flexibilité optimales pour le dispositif d'assemblage selon l'invention.

Par ailleurs, de tels moyens de bridage composés d'une multitude d'organes mobiles indépendants offrent une vraie flexibilité au dispositif d'assemblage, qui peut ainsi s'adapter facilement et rapidement à d'autres formes de pièces à assembler.

De même, un tel dispositif d'assemblage 10 selon l'invention, dimensionné pour intégrer une fonction de projection d'un débit d'air, permet ainsi d'éviter tout phénomène de carbonisation sur la surface supérieure de la pièce supérieure, selon les matériaux utilisés pour les pièces 11, 12, indispensable en termes de soudabilité et de qualité de soudage.

De même, les quatre doigts d'application 23 de l'embout de bridage 20 selon un mode particulier de réalisation permettent d'avoir un embout de bridage « symétrique », qui se déplace de façon simple au niveau de l'interface de soudage 17, sans rotation superflue et complexe de la tête du robot de soudage associé.

En outre, l'utilisation d'un moyen de projection d'air 28 associé au moyen de projection 14 du faisceau laser F permet d'utiliser une pièce supérieure 11 avec un matériau peu transparent, ce qui n'est pas possible avec les dispositifs d'assemblage connus de l'état de la technique.

Un procédé d'assemblage de deux pièces 11, 12 en matériaux thermoplastiques par soudage laser par transparence au moyen d'un dispositif d'assemblage comme décrit ci-dessus va maintenant être décrit en référence aux figures 1 à 5b et 7.

Le procédé d'assemblage consiste à positionner au préalable la pièce inférieure 12 sur le support 13, puis la pièce supérieure 11 sur la pièce inférieure 12. Afin d'assurer un positionnement et un maintien corrects de l'ensemble des deux pièces 11, 12 sur le support 13, une étape de bridage minimal, ou de mise en référence géométrique préalable, est réalisée. Par exemple, des moyens de bridage minimal 34 (figure 2) peuvent être utilisés pour l'ensemble des pièces 11, 12, afin d'éviter tout mouvement intempestif des pièces 11, 12 positionnées sur le support 13.

Puis, le procédé d'assemblage selon l'invention comporte une étape de référencement géométrique de l'ensemble des deux pièces 11, 12 positionné sur le support 13 par les premiers moyens de bridage 15 inférieurs. Plus particulièrement, les organes mobiles 16 sont tous actionnés indépendamment les uns des autres selon la géométrie des pièces 11, 12 et sont placés en appui contre la surface inférieure de la pièce inférieure 12, tout le long de l'interface de soudage 17 des deux pièces 11, 12 assemblées (figure 7).

Puis, le procédé d'assemblage selon l'invention comporte une étape de conformation, ou mise en conformité, de l'ensemble des deux pièces 11, 12 positionné sur le support 13 par l'embout de bridage 20. Plus particulièrement, l'embout de bridage 20 est positionné au début de l'interface de soudage 17 en appui contre la surface supérieure de la pièce supérieure 11, de sorte à exercer un effort prédéterminé nécessaire et suffisant au bon accostage des deux pièces 11, 12 à l'interface de soudage 17, par l'intermédiaire notamment du système de gestion 24 de l'effort.

Puis, une fois cet effort prédéterminé appliqué, l'étape de soudage laser par transparence peut commencer par projection du faisceau laser F au niveau de l'interface de soudage 17 et déplacement de l'embout de bridage 20, selon la flèche f3 (figures 1 et 4), tout le long du parcours constitué par l'interface de soudage 17. Ainsi, l'embout de bridage 20 tout en parcourant l'interface de soudage 17 applique un effort prédéterminé jouant le rôle de bridage supérieur, afin d'assurer un accostage optimal entre les pièces 11, 12 nécessaire au bon déroulement du procédé d'assemblage.

Dans le mode de réalisation représenté sur les figures 1 et 2, l'embout de bridage 20 applique un effort prédéterminé constant sur la surface supérieure de la pièce supérieure 11, par l'intermédiaire du système de gestion 24 de l'effort. Le procédé consiste alors à régler la tension du ressort 25 au repos, avant le début du procédé d'assemblage associé, le système de gestion 24 permettant de maintenir cet effort prédéterminé constant tout le long du parcours de l'interface de soudage 17, pendant l'étape de soudage laser du procédé d'assemblage.

Dans le mode de réalisation représenté sur la figure 3, l'embout de bridage 20 applique un effort variable contre la surface supérieure de la pièce supérieure 11, le long du parcours de l'interface de soudage 17. Le procédé consiste alors à appliquer un effort prédéterminé au début de l'étape de soudage laser et à ajuster et régler cet effort par l'intermédiaire des moyens d'asservissement 40 du système de gestion 24 de l'effort tout le long du parcours de l'interface de soudage 17, notamment dans le but de maintenir une distance focale d constante.

Par ailleurs, le procédé d'assemblage selon l'invention comporte avantageusement une étape de projection d'un flux d'air A maîtrisé, simultanément à l'étape de soudage laser, au niveau de la surface supérieure de la pièce supérieure 11, comme représenté sur les figures 2 et 3. Un tel apport d'air permet notamment d'éviter tout phénomène de carbonisation à la surface des pièces assemblées et permet avantageusement de refroidir légèrement l'embout de bridage 20, au coeur duquel est projeté le faisceau laser F.

Un tel procédé d'assemblage par soudage laser par transparence de deux pièces en matériaux thermoplastiques permet donc de réaliser un assemblage de façon simple, rapide et efficace, pour des pièces en matériaux moins chers et aussi efficaces que des matériaux classiques. Par ailleurs, une telle étape de soudage laser combinée à des moyens de bridage supérieur, qui sont aptes à maintenir un effort prédéterminé contre la surface supérieure de la pièce supérieure tout le long de l'interface de soudage, permettent notamment d'optimiser le procédé et d'obtenir des gains en termes de temps de soudage et en termes de simplicité, de flexibilité et de coût.

L'invention n'est pas limitée aux différents modes de réalisation du dispositif d'assemblage et du procédé d'assemblage et de l'embout de bridage associés décrits ci-dessus. Notamment, le dispositif d'assemblage peut comporter tout type de premiers moyens de bridage 15 inférieurs, tant qu'ils permettent un référencement géométrique optimal, et peut comporter tout type de seconds moyens de bridage 18 supérieurs, notamment d'embout de bridage 20, tant qu'ils permettent une application d'un effort prédéterminé constant ou variable et un accostage parfait des deux pièces 11, 12 au niveau de l'interface de soudage 17, pendant l'étape de soudage laser du procédé d'assemblage associé. De même, le nombre, la forme et l'orientation des éléments constitutifs des premiers moyens de bridage 15 peuvent être différents, tant que leur orientation est sensiblement dans le sens de projection YY du faisceau laser F, perpendiculairement à l'interface de soudage 17.

De même, le dispositif d'assemblage 10 peut comporter tout type de moyen de projection d'air 28, tant qu'il permet un apport d'air maîtrisé au niveau de la surface supérieure de la pièce supérieure 11, et tout type de moyen de projection 14 d'un faisceau laser F. Le dispositif d'assemblage 10 selon l'invention peut également comporter tout type de système de gestion 24 d'effort, tant qu'il permet de conserver une distance focale d constante entre l'interface de soudage 17 et le moyen de projection 14 du faisceau laser F. D'une façon générale, le dispositif d'assemblage selon l'invention peut comporter tout type de système de gestion 24 d'effort, associé avantageusement à tout type de moyen d'apport d'air 28, à tout type de moyen de projection 14 d'un faisceau laser F et à tout type d'embout de bridage 20.

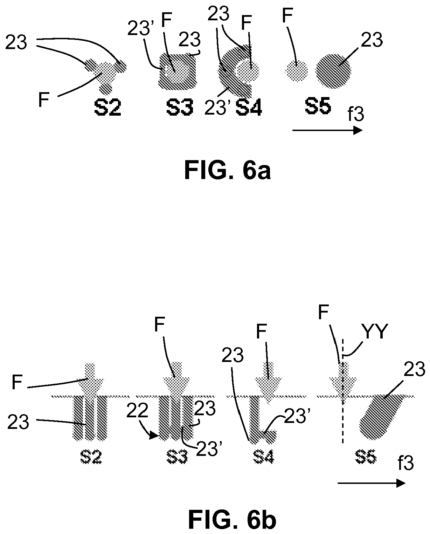

L'embout de bridage 20 selon l'invention peut être d'une toute autre forme, tant qu'il permet une application d'effort optimale et sans détérioration de la surface supérieure de la pièce supérieure. Notamment, comme représenté très schématiquement sur les figures 6a et 6b, l'embout de bridage 20 peut comporter un nombre de doigts d'application 23 différent, tant qu'ils permettent l'application de l'effort prédéterminé nécessaire au moyens de bridage 18 supérieurs.

Notamment, comme représenté sur la figure 6a, sur laquelle le faisceau laser F est représenté par un cercle plein de couleur gris clair, l'embout de bridage 20 peut comporter trois doigts d'application 23, de préférence répartis selon les sommets d'un triangle équilatéral (solution S2); ou peut comporter quatre doigts d'application 23 reliés par une cage 23', à l'extrémité 22 de l'embout de bridage 20 (solution S3); ou peut comporter trois doigts d'application 23, répartis en demi-cercle et reliés par une cage 23', à l'extrémité 22 de l'embout de bridage 20 (solution S4) ; ou peut ne comporter qu'un seul doigt d'application 23, incliné par rapport à l'axe de projection YY du faisceau laser F (solution S5) et venant en appui vers l'avant du faisceau laser F, selon le sens de défilement f3 (figure 6b).

Dans le cas des solutions S2 et S4, l'axe du robot associé au moyen de projection 14 du faisceau laser F doit alors gérer un degré de liberté supplémentaire pour faciliter la trajectoire du robot, à savoir une rotation, de sorte à positionner toujours vers l'avant au moins un doigt d'application 23, selon le sens de défilement f3 de l'embout de bridage 20, comme représenté sur la figure 6b pour la solution S5.

## Revendications

1. Dispositif d'assemblage (10) de deux pièces par soudage laser par transparence, une première pièce supérieure (11) transparente étant positionnée sur une seconde pièce inférieure (12) absorbante, l'ensemble des deux pièces (11, 12) étant positionné sur un support (13) pour le soudage laser, le dispositif d'assemblage (10) comportant un moyen de projection (14) d'un faisceau laser (F) sur la surface supérieure de ladite pièce supérieure (11) et des moyens d'assemblage (15, 18) aptes à maintenir l'ensemble des deux pièces (11, 12) assemblées entre elles sur le support (13), **dispositif** dans lequel lesdits moyens d'assemblage comportent au moins :
- des premiers moyens de bridage (15) qui comportent une pluralité d'organes mobiles (16), aptes à être actionnés indépendamment les uns des autres au niveau d'une interface de soudage (17) prédéterminée des deux pièces (11, 12), destinés à assurer le référencement géométrique de l'ensemble des deux pièces (11, 12) positionné sur ledit support (13),
- des seconds moyens de bridage (18, 20), destinés à exercer un effort prédéterminé contre l'ensemble des deux pièces (11, 12) positionné sur ledit support (13),
- et un système de gestion (24), associé aux dits seconds moyens de bridage (18, 20) et destiné à régler ledit effort exercé par lesdits seconds moyens de bridage (18, 20) au niveau de ladite interface de soudage (17).

2. Dispositif d'assemblage (10) selon la revendication précédente, **caractérisé en ce que** lesdits premiers moyens de bridage (15) sont actionnables manuellement ou automatiquement.

3. Dispositif d'assemblage (10) selon l'une quelconque des revendications précédentes, **caractérisé en ce que,** le faisceau laser (F) étant projeté selon un axe (YY) sensiblement perpendiculaire à ladite interface de soudage (17), lesdits premiers moyens de bridage (15) sont actionnés selon une direction parallèle audit axe (YY) de projection du faisceau laser (F).

4. Dispositif d'assemblage (10) selon l'une quelconque des revendications précédentes, **caractérisé en ce que** lesdits seconds moyens de bridage (18, 20) sont reliés à une interface de fixation mécanique (26, 37), de sorte à positionner lesdits seconds moyens de bridage (18, 20) en regard d'une extrémité (19) dudit moyen de projection (14) du faisceau laser (F).

5. Dispositif d'assemblage (10) selon l'une quelconque des revendications précédentes, **caractérisé en ce que** lesdits seconds moyens de bridage (18) comportent un embout de bridage (20) muni d'au moins un doigt d'application (23).

6. Dispositif d'assemblage (10) selon la revendication précédente, **caractérisé en ce que** ledit embout de bridage (20) comporte quatre doigts d'application (23) sensiblement parallèles, agencés de sorte à être positionnés sensiblement aux quatre coins d'un carré.

7. Dispositif d'assemblage (10) selon l'une des revendications 5 ou 6, **caractérisé en ce que** chaque doigt d'application (23) comporte un embout (32) sensiblement arrondi.

8. Dispositif d'assemblage (10) selon l'une quelconque des revendications précédentes, **caractérisé en ce que** lesdits seconds moyens de bridage (18, 20) comportent des moyens de refroidissement associés.

9. Dispositif d'assemblage (10) selon l'une quelconque des revendications précédentes, **caractérisé en ce que** ledit système de gestion (24) de l'effort comporte des moyens de réglage (25, 26, 26a), associés audit moyen de projection (14) du faisceau laser (F), de sorte à maintenir ledit effort prédéterminé constant au niveau de l'interface de soudage (17) et à maintenir une distance focale (d) constante entre ladite interface de soudage (17) et ledit moyen de projection (14) du faisceau laser (F).

10. Dispositif d'assemblage (10) selon l'une quelconque des revendications 1 à 8, **caractérisé en ce que** ledit système de gestion (24) de l'effort comporte des moyens d'asservissement (40), associés audit moyen de projection (14) du faisceau laser (F), de sorte à régler ledit effort prédéterminé en continu au niveau de l'interface de soudage (17) et à maintenir une distance focale (d) constante entre ladite interface de soudage (17) et ledit moyen de projection (14) du faisceau laser (F).

11. Dispositif d'assemblage (10) selon l'une quelconque des revendications précédentes, **caractérisé en ce qu'**il comporte un moyen d'apport d'air (28), destiné à projeter un flux d'air (A) au niveau de la surface supérieure de ladite pièce supérieure (11) simultanément au faisceau laser (F).

12. Dispositif d'assemblage (10) selon la revendication précédente, **caractérisé en ce que,** ledit moyen de projection (14) du faisceau laser (F) étant muni d'un cône (19) de projection, ledit moyen d'apport d'air (28) est relié audit cône (19) de projection, lequel joue le rôle d'un cône de canalisation du flux d'air (A), de sorte à obtenir un flux d'air (A) maîtrisé au niveau de la surface supérieure de ladite pièce supérieure (11).

13. Procédé d'assemblage de deux pièces par soudage laser par transparence, une première pièce supérieure (11) transparente étant positionnée sur une seconde pièce inférieure (12) absorbante, les deux pièces (11, 12) étant positionnées sur un support (13) pour le soudage laser et assemblées entre elles sur le support (13) au moyen d'un dispositif d'assemblage (10) selon l'une quelconque des revendications précédentes, **procédé** comportant au moins :
- une étape de référencement géométrique de l'ensemble des deux pièces (11, 12) positionné sur ledit support (13) par des premiers moyens de bridage (15) qui comportent une pluralité d'organes mobiles (16), en actionnant lesdits organes mobiles indépendamment les uns des autres au niveau d'une interface de soudage (17) prédéterminée des deux pièces (11, 12),
- une étape de conformation de l'ensemble des deux pièces (11, 12) positionné sur le support (13) par des seconds moyens de bridage (18, 20), associés à un système de gestion (24) d'un effort prédéterminé, apte à maîtriser ledit effort exercé par lesdits seconds moyens de bridage (18, 20) contre l'ensemble des deux pièces (11, 12) positionné sur ledit support (13), et
- une étape de soudage laser par transparence par l'intermédiaire d'un moyen de projection (14) d'un faisceau laser (F) au niveau de ladite interface de soudage (17).

14. Procédé d'assemblage selon la revendication précédente, **caractérisé en ce que** ladite étape de conformation de l'ensemble des deux pièces (11, 12) est réalisée simultanément à l'étape de soudage laser, au niveau de l'interface de soudage (17), par lesdits seconds moyens de bridage (18, 20) en contact avec la surface supérieure de la pièce supérieure (11).

15. Procédé d'assemblage selon l'une des revendications 13 ou 14, **caractérisé en ce qu'**un effort prédéterminé constant est appliqué par lesdits seconds moyens de bridage (18, 20) contre la surface supérieure de la pièce supérieure (11), lors de ladite étape de soudage laser.

16. Procédé d'assemblage selon l'une des revendications 13 ou 14, **caractérisé en ce qu'**un effort prédéterminé variable est appliqué contre la surface supérieure de la pièce supérieure (11), lors de ladite étape de soudage laser, par l'intermédiaire de moyens d'asservissement (40) dudit système de gestion (24) de l'effort associé aux dits seconds moyens de bridage (18, 20).

17. Procédé d'assemblage selon l'une des revendications 13 à 16, **caractérisé en ce qu'**il comporte simultanément à ladite étape de soudage laser, une étape de projection d'un flux d'air (A) maîtrisé au niveau de la surface supérieure de ladite pièce supérieure (11).

18. Embout de bridage (20) associé à un dispositif d'assemblage (10) selon l'une quelconque des revendications 1 à 12, le dispositif d'assemblage (10) étant destiné au soudage laser par transparence de deux pièces (11, 12), une première pièce supérieure (11) transparente étant positionnée sur une seconde pièce inférieure (12) absorbante, l'ensemble des deux pièces (11, 12) étant positionné sur un support (13) pour le soudage laser, **embout de bridage caractérisé en ce qu'**il comporte au moins un doigt d'application (23) destiné à exercer un effort prédéterminé contre l'ensemble des deux pièces (11, 12) positionné sur ledit support (13) **et en ce que** chaque doigt d'application (23) comporte une section (31) sensiblement arrondie et un embout (32) sensiblement bombé.

19. Embout de bridage (20) selon la revendication précédente, **caractérisé en ce qu'**il comporte quatre doigts d'application (23) sensiblement parallèles, agencés de sorte à être positionnés sensiblement aux quatre coins d'un carré.

20. Embout de bridage (20) selon l'une quelconque des revendications 18 à 20, **caractérisé en ce que,** l'embout de bridage (20) comportant plusieurs doigts d'application (23), l'embout de bridage (20) comporte au moins une paroi pleine (33) reliant les doigts d'application (23), de sorte à former des interstices (30) entre les doigts d'application (23).

## Patentansprüche

1. Vorrichtung zur Montage (10) von zwei Teilen durch Laser-Transparent-Schweißen, wobei ein erster transparenter oberer Teil (11) auf einem zweiten absorbierenden unteren Teil (12) angeordnet ist, wobei die Anordnung der zwei Teile (11, 12) auf einem Träger (13) zum Laserschweißen angeordnet ist, wobei die Vorrichtung zur Montage (10) ein Mittel zum Projizieren (14) eines Laserstrahls (F) auf die obere Fläche des oberen Teils (11) und Mittel zur Montage (15, 18) aufweist, die geeignet sind, die Anordnung der zwei Teile (11, 12) miteinander verbunden auf dem Träger (13) zu halten,
Vorrichtung, wobei die Mittel zur Montage mindestens Folgendes aufweisen:
- erste Klemmmittel (15), die mehrere bewegliche Organe (16) aufweisen, die geeignet sind, unabhängig voneinander an einer vorbestimmten Schweißschnittstelle (17) der zwei Teile (11, 12) betätigt zu werden, die dazu bestimmt sind, die geometrische Referenzierung der Anordnung der zwei Teile (11, 12), die auf dem Träger (13) angeordnet ist, zu gewährleisten,
- zweite Klemmmittel (18, 20), die dazu bestimmt sind, eine vorbestimmte Kraft gegen die Anordnung der zwei Teile (11, 12), die auf dem Träger (13) angeordnet ist, auszuüben,
- und ein Steuersystem (24), das mit den zweiten Klemmmitteln (18, 20) verbunden ist und dazu bestimmt ist, die Kraft, die von den zweiten Klemmmitteln (18, 20) an der Schweißschnittstelle (17) ausgeübt wird, zu regeln.

2. Vorrichtung zur Montage (10) nach dem vorhergehenden Anspruch, **dadurch gekennzeichnet, dass** die ersten Klemmmittel (15) manuell oder automatisch betätigt werden können.

3. Vorrichtung zur Montage (10) nach einem der vorhergehenden Ansprüchen, **dadurch gekennzeichnet, dass**, nachdem der Laserstrahl (F) entlang einer Achse (YY) projiziert wird, die im Wesentlichen senkrecht zu der Schweißschnittstelle (17) ist, die ersten Klemmmittel (15) in einer Richtung betätigt werden, die parallel zu der Achse (YY) der Projektion des Laserstrahls (F) ist.

4. Vorrichtung zur Montage (10) nach einem der vorhergehenden Ansprüche, **dadurch gekennzeichnet, dass** die zweiten Klemmmittel (18, 20) mit einer mechanischen Befestigungsschnittstelle (26, 37) derart verbunden sind, um die zweiten Klemmmittel (18, 20) in Bezug auf ein Ende (19) des Projektionsmittels (14) des Laserstrahls (F) anzuordnen.

5. Vorrichtung zur Montage (10) nach einem der vorhergehenden Ansprüche, **dadurch gekennzeichnet, dass** die zweiten Klemmmittel (18) ein Klemmendstück (20) aufweisen, das mit mindestens einem Anwendungsfinger (23) versehen ist.

6. Vorrichtung zur Montage (10) nach dem vorhergehenden Anspruch, **dadurch gekennzeichnet, dass** das Klemmendstück (20) vier im Wesentlichen parallele Anwendungsfinger (23) aufweist, die derart angeordnet sind, um im Wesentlichen an den vier Ecken eines Vierecks angeordnet zu sein.

7. Vorrichtung zur Montage (10) nach einem der Ansprüche 5 oder 6, **dadurch gekennzeichnet, dass** jeder Anwendungsfinger (23) ein im Wesentlichen abgerundetes Endstück (32) aufweist.

8. Vorrichtung zur Montage (10) nach einem der vorhergehenden Ansprüche, **dadurch gekennzeichnet, dass** die zweiten Klemmmittel (18, 20) zugeordnete Kühlmittel aufweisen.

9. Vorrichtung zur Montage (10) nach einem der vorhergehenden Ansprüche, **dadurch gekennzeichnet, dass** das Steuersystem (24) der Kraft Einstellmittel (25, 26, 26a) aufweist, die mit dem Projektionsmittel (14) des Laserstrahls (F) verbunden sind, derart, um die vorbestimmte Kraft an der Schweißschnittstelle (17) konstant zu halten und um eine konstante Brennweite (d) zwischen der Schweißschnittstelle (17) und dem Projektionsmittel (14) des Laserstrahls (F) zu halten.

10. Vorrichtung zur Montage (10) nach einem der vorhergehenden Ansprüche 1 bis 8, **dadurch gekennzeichnet, dass** das Steuersystem (24) der Kraft Regelmittel (40) aufweist, die mit dem Projektionsmittel (14) des Laserstrahls (F) verbunden sind, derart, um die vorbestimmte Kraft an der Schweißschnittstelle (17) kontinuierlich zu regeln und um eine konstante Brennweite (d) zwischen der Schweißschnittstelle (17) und dem Projektionsmittel (14) des Laserstrahls (F) zu halten.

11. Vorrichtung zur Montage (10) nach einem der vorhergehenden Ansprüche, **dadurch gekennzeichnet, dass** sie ein Luftzufuhrmittel (28) aufweist, das dazu bestimmt ist, einen Luftstrom (A) an der oberen Fläche des oberen Teils (11) gleichzeitig mit dem Laserstrahl (F) auszustoßen.

12. Vorrichtung zur Montage (10) nach dem vorhergehenden Anspruch, **dadurch gekennzeichnet, dass** das Projektionsmittel (14) des Laserstrahls (F) mit einem Projektionskegel (19) versehen ist, wobei das Luftzufuhrmittel (28) mit dem Projektionskegel (19) verbunden ist, der die Rolle eines Kegels zur Kanalisation des Luftstroms (A) derart spielt, um einen kontrollierten Luftstrom (A) an der oberen Fläche des oberen Teils (11) zu erhalten.

13. Verfahren zur Montage von zwei Teilen durch Laser-Transparent-Schweißen, wobei ein erster transparenter oberer Teil (11) auf einem zweiten absorbierenden unteren Teil (12) angeordnet wird, wobei die zwei Teile (11, 12) auf einem Träger (13) zum Laserschweißen angeordnet werden und mittels einer Vorrichtung zur Montage (10) nach einem der vorhergehenden Ansprüche miteinander auf dem Träger (13) verbunden werden, Verfahren, das mindestens Folgendes aufweist:
- einen Schritt der geometrischen Referenzierung der Anordnung der zwei Teile (11, 12), die auf dem Träger (13) durch erste Klemmmittel (15) angeordnet werden, die mehrere bewegliche Organe (16) aufweisen, indem die beweglichen Organe unabhängig voneinander an einer vorbestimmten Schweißschnittstelle (17) der zwei Teile (11, 12) betätigt werden,
- einen Schritt des Bildens der Anordnung der zwei Teile (11, 12), die auf dem Träger (13) durch zweite Klemmmittel (18, 20) angeordnet werden, die mit einem Steuersystem (24) einer vorbestimmten Kraft verbunden werden, das geeignet ist, die Kraft, die von den zweiten Klemmmitteln (18, 20) gegen die Anordnung der zwei Teile (11, 12) ausgeübt wird, die auf dem Träger (13) angeordnet wird, zu regeln, und
- einen Schritt des Laser-Transparent-Schweißens durch ein Mittel zum Projizieren (14) eines Laserstrahls (F) an der Schweißschnittstelle (17).

14. Verfahren zur Montage nach dem vorhergehenden Anspruch, **dadurch gekennzeichnet, dass** der Schritt des Bildens der Anordnung der zwei Teile (11, 12) gleichzeitig mit dem Schritt des Laserschweißens an der Schweißschnittstelle (17) durch die zweiten Klemmmittel (18, 20) in Kontakt mit der oberen Fläche des oberen Teils (11) durchgeführt wird.

15. Verfahren zur Montage nach einem der Ansprüche 13 oder 14, **dadurch gekennzeichnet, dass** eine konstante vorbestimmte Kraft durch die zweiten Klemmmittel (18, 20) gegen die obere Fläche des oberen Teils (11) während des Schrittes des Laserschweißens ausgeübt wird.

16. Verfahren zur Montage nach einem der Ansprüche 13 oder 14, **dadurch gekennzeichnet, dass** eine variable vorbestimmte Kraft gegen die obere Fläche des oberen Teils (11) durch Regelmittel (40) des Steuersystems (24) der Kraft, das mit den zweiten Klemmmitteln (18, 20) verbunden wird, während des Schrittes des Laserschweißens ausgeübt wird.

17. Verfahren zur Montage nach einem der Ansprüche 13 bis 16, **dadurch gekennzeichnet, dass** es gleichzeitig mit dem Schritt des Laserschweißens einen Schritt des Ausstoßens eines kontrollierten Luftstroms (A) an der oberen Fläche des oberen Teils (11) aufweist.

18. Klemmendstück (20), das mit einer Vorrichtung zur Montage (10) nach einem der Ansprüche 1 bis 12 verbunden ist, wobei die Vorrichtung zur Montage (10) zum Laser-Transparent-Schweißen von zwei Teilen (11, 12) bestimmt ist, wobei ein erster transparenter oberer Teil (11) auf einem zweiten absorbierenden unteren Teil (12) angeordnet ist, wobei die Anordnung der zwei Teile (11, 12) auf einem Träger (13) zum Laserschweißen angeordnet ist, Klemmendstück, das **dadurch gekennzeichnet ist, dass** es mindestens einen Anwendungsfinger (23) aufweist, der dazu bestimmt ist, eine vorbestimmte Kraft gegen die Anordnung der zwei Teile (11, 12), die auf dem Träger (13) angeordnet ist, auszuüben, und dass jeder Anwendungsfinger (23) einen im Wesentlichen abgerundeten Querschnitt (31) und ein im Wesentlichen gewölbtes Endstück (32) aufweist.

19. Klemmendstück (20) nach dem vorhergehenden Anspruch, **dadurch gekennzeichnet, dass** es vier im Wesentlichen parallele Anwendungsfinger (23) aufweist, die derart angeordnet sind, um im Wesentlichen an den vier Ecken eines Vierecks angeordnet zu sein.

20. Klemmendstück (20) nach einem der Ansprüche 18 bis 20, **dadurch gekennzeichnet, dass**, wenn das Klemmendstück (20) mehrere Anwendungsfinger (23) aufweist, das Klemmendstück (20) mindestens eine Vollwand (33) aufweist, die die Anwendungsfinger (23) derart verbindet, um zwischen den Anwendungsfingern (23) Zwischenräume (30) zu bilden.

## Claims

1. Device (10) for assembling two parts by laser transmission welding, a first transparent top part (11) being positioned on a second absorbing bottom part (12), the assembly of the two parts (11, 12) being positioned on a support (13) for the laser welding, the assembly device (10) comprising a means (14) for projecting a laser beam (F) onto the top surface of said top part (11) and assembly means (15, 18) capable of keeping the assembly of the two parts (11, 12) assembled together on the support (13),
**in which device** said assembly means comprise at least:
- first clamping means (15, 16), which comprise a plurality of movable members (16), capable of being actuated independently of one another at a predetermined welding interface (17) of the two parts (11, 12), intended to ensure the geometrical referencing of the assembly of the two parts (11, 12) positioned on said support (13),
- second clamping means (18, 20), intended to exert a predetermined force against the assembly of the two parts (11, 12) positioned on said support (13),
- and a management system (24), associated with said second clamping means (18, 20) and intended to adjust said force exerted by said second clamping means (18, 20) at said welding interface (17).

2. Assembly device (10) according to the preceding claims, **characterized in that** said first clamping means (15) can be actuated manually or automatically.

3. Assembly device (10) according to either of the preceding claims, **characterized in that,** the laser beam (F) being projected on an axis (YY) substantially at right angles to said welding interface (17), said first clamping means (15) are actuated in a direction parallel to said axis (YY) of projection of the laser beam (F).

4. Assembly device (10) according to any one of the preceding claims, **characterized in that** said second clamping means (18, 20) are linked to a mechanical fixing interface (26, 37), so as to position said second clamping means (18, 20) facing an end (19) of said means (14) for projecting the laser beam (F).

5. Assembly device (10) according to any one of the preceding claims, **characterized in that** said second clamping means (18) comprise a clamping end-piece (20) provided with at least one application finger (23).

6. Assembly device (10) according to the preceding claim, **characterized in that** said clamping end-piece (20) comprises four substantially parallel application fingers (23), arranged so as to be positioned substantially at the four corners of a square.

7. Assembly device (10) according to either of Claims 5 and 6, **characterized in that** each application finger (23) comprises a substantially rounded end-piece (32).

8. Assembly device (10) according to any one of the preceding claims, **characterized in that** said second clamping means (18, 20) comprise associated cooling means.

9. Assembly device (10) according to any one of the preceding claims, **characterized in that** said force management system (24) comprises adjustment means (25, 26, 26a), associated with said means (14) for projecting the laser beam (F), so as to keep said predetermined force constant at the welding interface (17) and maintain a constant focal distance (d) between said welding interface (17) and said means (14) for projecting the laser beam (F).

10. Assembly device (10) according to any one of Claims 1 to 8, **characterized in that** said force management system (24) comprises servo-control means (40), associated with said means (14) for projecting the laser beam (F), so as to adjust said predetermined force continuously at the welding interface (17) and maintain a constant focal distance (d) between said welding interface (17) and said means (14) for projecting the laser beam (F).

11. Assembly device (10) according to any one of the preceding claims, **characterized in that** it comprises an air input means (28), intended to project an air stream (A) onto the top surface of said top part (11) simultaneously with the laser beam (F).

12. Assembly device (10) according to the preceding claim, **characterized in that,** said means (14) for projecting the laser beam (F) being provided with a projection cone (19), said air input means (28) is linked to said projection cone (19), which acts as a cone for channeling the air stream (A), so as to obtain a controlled air stream (A) on the top surface of said top part (11).

13. Method for assembling two parts by laser transmission welding, a first transparent top part (11) being positioned on a second absorbing bottom part (12), the two parts (11, 12) being positioned on a support (13) for the laser welding and assembled together on the support (13) by means of an assembly device (10) according to any one of the preceding claims,
**the method** comprising at least:
- a step of geometrical referencing of the assembly of the two parts (11, 12) positioned on said support (13) by first clamping means (15),
- a step of conformation of the assembly which comprise a plurality of movable members (16), by actuating said movable members independently of one another at a predetermined welding interface (17) of the two parts (11, 12) of the two parts (11, 12) positioned on the support (13) by second clamping means (18, 20), associated with a predetermined force management system (24), capable of controlling said force exerted by said second clamping means (18, 20) against the assembly of the two parts (11, 12) positioned on said support (13), and
- a step of laser transmission welding via a means (14) for projecting a laser beam (F) at said welding interface (17).

14. Assembly method according to the preceding claim, **characterized in that** said step of conformation of the assembly of the two parts (11, 12) is carried out simultaneously with the laser welding step, at the welding interface (17), by said second clamping means (18, 20) in contact with the top surface of the top part (11).

15. Assembly method according to either of Claims 13 and 14, **characterized in that** a constant predetermined force is applied by said second clamping means (18, 20) against the top surface of the top part (11), during said laser welding step.

16. Assembly method according to either of Claims 13 and 14, **characterized in that** a variable predetermined force is applied against the top surface of the top part (11), during said laser welding step, via servo-control means (40) of said force management system (24) associated with said second clamping means (18, 20).

17. Assembly method according to one of Claims 13 to 16, **characterized in that** it comprises, simultaneously with said laser welding step, a step of projecting a controlled air stream (A) onto the top surface of said top part (11).

18. Clamping end-piece (20) associated with an assembly device (10) according to any one of Claims 1 to 12, the assembly device (10) being intended for the laser transmission welding of two parts (11, 12), a first transparent top part (11) being positioned on a second absorbing bottom part (12), the assembly of the two parts (11, 12) being positioned on a support (13) for the laser welding, **the clamping end-piece being characterized in that** it comprises at least one application finger (23) intended to exert a predetermined force against the assembly of the two parts (11, 12) positioned on said support (13) **and in that** each application finger (23) comprises a substantially rounded section (31) and a substantially domed end-piece (32).

19. Clamping end-piece (20) according to the preceding claim, **characterized in that** it comprises four substantially parallel application fingers (23), arranged so as to be positioned substantially at the four corners of a square.

20. Clamping end-piece (20) according to any one of Claims 18 to 20, **characterized in that,** the clamping end-piece (20) comprising a number of application fingers (23), the clamping end-piece (20) comprises at least one solid wall (33) linking the application fingers (23), so as to form interstices (30) between the application fingers (23).
